# EUROPÄISCHE PATENTSCHRIFT

(11) **EP 3 425 172 B1**
(45) Veröffentlichungstag und Bekanntmachung des Hinweises auf die Patenterteilung: **29.11.2023**
(21) Anmeldenummer: 18180105.1
(22) Anmeldetag: 27.06.2018
(51) Int. Cl.: F01D 11/12, F01D 25/24, F01D 11/00, F01D 9/04

(54) **DICHTRING FÜR EINE TURBOMASCHINE, TURBOMASCHINE MIT EINEM SOLCHEN DICHTRING UND VERFAHREN ZUR HERSTELLUNG EINES SOLCHEN DICHTRINGS**
TURBOMACHINE SEALING RING, TURBOMACHING WITH SUCH A SEAL RING AND METHOD OF MANUFACTURING SUCH A SEAL RING
BAGUE D'ÉTANCHÉITÉ POUR TURBOMACHINES, TURBOMACHINE AYANT UNE TELLE BAGUE D'ÉTANCHÉITÉ ET PROCÉDÉ DE FABRICATION D'UNE TELLE BAGUE D'ÉTANCHÉITÉ

(30) Priorität: 04.07.2017 DE 102017211316
(43) Veröffentlichungstag der Anmeldung: 09.01.2019
(73) Patentinhaber: MTU Aero Engines AG, 80995 München (DE)
(72) Erfinder: Scherer, Christian, 85244 Röhrmoos (DE); Eibelshäuser, Peter, 81247 München (DE); Schlothauer, Steffen, 85253 Erdweg (DE); Jakimov, Andreas, 85777 Fahrenzhausen (DE); Kraus, Jürgen, 85221 Dachau (DE)

(56) Entgegenhaltungen:
- EP-A1- 2 871 325
- DE-A1-102013 219 024
- DE-A1-102015 224 160
- US-A- 3 558 237
- US-A- 4 767 267
- US-A- 4 834 613
- US-A- 6 139 264
- US-A1- 2016 123 160
- US-B2- 9 079 245

## Beschreibung

Die vorliegende Erfindung betrifft einen Dichtring für eine Turbomaschine, eine Anordnung, eine Verdichter- oder Turbinenstufe und eine Gasturbine mit dem Dichtring sowie ein Verfahren zur Herstellung des Dichtrings.

In Turbomaschinen werden Dichtringe insbesondere zur Abdichtung zwischen drehenden und gehäusefesten Bauteilen verwendet, an denen die Dichtringe befestigt werden.

Nach betriebsinterner Praxis werden solche Dichtringe bislang meist mittels Drehmaschinen zerspanend gefertigt und sind daher meist rotationssymmetrisch bzw. weisen in Umfangsrichtung konstante Profilquerschnitte auf. US 4834613 A, US 9079245 B2 und US 20160123160 A1 offenbaren Dichtringe mit in Umfangsrichtung variierenden Profilquerschnitten.

Eine Aufgabe einer Ausführung der vorliegenden Erfindung ist es, einen Turbomaschinen-Dichtring, insbesondere dessen Herstellung, zu verbessern.

Diese Aufgabe wird durch einen Dichtring mit den Merkmalen des Anspruchs 1 bzw. ein Verfahren mit den Merkmalen des Anspruchs 12 gelöst. Ansprüche 10-11 stellen eine Anordnung, eine Verdichter- oder Turbinenstufe und eine Gasturbine mit wenigstens einem hier beschriebenen Dichtring unter Schutz. Vorteilhafte Ausführungsformen der Erfindung sind Gegenstand der Unteransprüche.

Nach einer Ausführung der vorliegenden Erfindung weist bzw. weisen ein Dichtring, insbesondere ein sogenannter Dichtungsträger, für eine Turbomaschine, insbesondere eine Verdichter- oder Turbinenstufe einer Gasturbine, insbesondere ein Dichtring einer Anordnung für eine bzw. einer Verdichter- oder Turbinenstufe einer Gasturbine, insbesondere ein oder mehrere Dichtringe einer Verdichter- und/oder einer Turbinenstufe einer Gasturbine, insbesondere eines Flugtriebwerks, (jeweils) eine Dichtung auf, die in einer Ausführung wenigstens teilweise wabenartig und/oder integral bzw. einstückig mit dem restlichen Dichtring ausgebildet und/oder als Einlaufbelag, insbesondere zum Einreiben und/oder Abdichten von Dichtrippen eines Rotors der Turbomaschine, vorgesehen bzw. eingerichtet ist bzw. verwendet wird. Ein Profilquerschnitt des Dichtrings variiert in Umfangsrichtung bzw. längs seines Umfangs.

Hierdurch kann in einer Ausführung insbesondere bei geringem Gesamtgewicht eine belastungsangepasste variierende Biegesteifigkeit und/oder eine vorteilhafte Buchsen- und/oder Verdrehsicherung realisiert werden.

Der Dichtring weist eine oder mehrere vollständig bzw. über seinen kompletten Umfang oder Abschnitt hiervon in Umfangsrichtung umlaufende radial( vorstehend)e Rippe(n) bzw. Radialrippe(n) auf, deren, insbesondere axiale und/oder radiale, Abmessung(en), insbesondere axiale und/oder radiale Höhe(n) bzw. Breite(n), und/oder, insbesondere axiale und/oder radiale, Anordnung(en) bzw. Position(en) in einer Ausführung in Umfangsrichtung bzw. längs seines Umfangs, insbesondere an einer oder mehreren Umfangspositionen unstetig und/oder wenigstens abschnittsweise stetig, variiert bzw. variieren.

Zusätzlich ist/sind die bzw. eine oder mehrere der radiale(n) Rippe(n) an einer Mantelfläche in einer, insbesondere hinterschnittenen, Umfangsnut angeordnet, mit der der Dichtring, insbesondere lösbar und/oder form- und/oder reibschlüssig und/oder an dem Leitring, befestigt ist bzw. wird bzw. die hierzu eingerichtet ist bzw. verwendet wird.

Hierdurch kann in einer Ausführung insbesondere eine belastungsangepasste variierende Biegesteifigkeit und/oder vorteilhafte Buchsensicherung realisiert werden.

In einer Ausführung wird bzw. ist der Dichtring, insbesondere lösbar und/oder form- und/oder reibschlüssig, an einem Leitring, insbesondere einem sogenannten Innenring, befestigt bzw. hierzu eingerichtet bzw. verwendet, an dem, insbesondere auf einer gegenüberliegenden Seite, in einer Ausführung Leitschaufeln, insbesondere verstellbar, angeordnet, insbesondere in Buchsen drehbar gelagert sind.

Dies stellt eine besonders vorteilhafte Verwendung eines erfindungsgemäßen Dichtrings dar.

In einer Ausführung variiert der Profilquerschnitt an einer oder mehreren Umfangspositionen, insbesondere Trennstellen bzw. Stirnseiten des dann in Umfangsrichtung segmentierten Dichtrings, unstetig bzw. sprunghaft.

Hierdurch kann in einer Ausführung insbesondere eine vorteilhafte Buchsen- und/oder Verdrehsicherung realisiert werden.

Zusätzlich oder alternativ variiert der Profilquerschnitt in einer Ausführung wenigstens abschnittsweise, insbesondere über wenigstens 10%, insbesondere wenigstens 20%, des Umfangs, stetig bzw. kontinuierlich bzw. monoton, insbesondere streng monoton, insbesondere linear mit der Umfangsposition.

Hierdurch kann in einer Ausführung insbesondere eine belastungsangepasste variierende Biegesteifigkeit und/oder eine vorteilhafte Buchsensicherung realisiert werden.

Nach einer Ausführung der vorliegenden Erfindung wird/werden bzw. ist/sind der Dichtring, insbesondere eines oder mehrerer seiner nachfolgend erläuterten Ringsegmente, insbesondere Teilsegmente, (jeweils) teilweise oder vollständig mittels eines generativen Fertigungsverfahrens hergestellt, insbesondere mittels selektiver Laserbeaufschlagung. Ein generatives Herstellungsverfahren kann als additives Herstellverfahren oder als Rapid Prototyping Verfahren bezeichnet werden und/oder ein schichtweises Herstellen mittels lokalem bzw. selektiven Verfestigen eines, insbesondere flüssigen, pastösen oder schüttfähigen, insbesondere pulverförmigen oder körnigem, Ausgangsmaterials umfassen. Besonders vorteilhaft wird als generatives Fertigungsverfahren selektives Laserschmelzen oder Lasersintern verwendet, ohne dass die vorliegende Erfindung jedoch hierauf beschränkt ist.

Hierdurch kann in einer Ausführung der variierende Profilquerschnitt vorteilhaft gefertigt werden.

Zusätzlich oder alternativ weist der Dichtring in einer Ausführung eine oder mehrere vollständig bzw. über seinen kompletten Umfang oder Abschnitt hiervon in Umfangsrichtung umlaufende axial( vorstehend)e Rippe(n) bzw. Axialrippe(n) auf, deren, insbesondere axiale und/oder radiale, Abmessung(en) , insbesondere axiale und/oder radiale Höhe(n) bzw. Breite(n), und/oder, insbesondere axiale und/oder radiale, Anordnung(en) bzw. Position(en) in einer Ausführung in Umfangsrichtung bzw. längs seines Umfangs, insbesondere an einer oder mehreren Umfangspositionen, insbesondere Trennstellen, unstetig und/oder wenigstens abschnittsweise stetig, variiert.

Durch solche, insbesondere in Umfangsrichtung variierende, radiale und/oder axiale Rippen kann in einer Ausführung eine belastungsangepasste variierende Biegesteifigkeit und/oder eine vorteilhafte Buchsen- und/oder Verdrehsicherung realisiert werden. Dabei kann eine in Umfangsrichtung umlaufende Rippe auch abschnittsweise unterbrochen bzw. ihre Höhe bzw. Breite auf Null reduziert sein.

"Axial" bezieht sich vorliegend insbesondere in fachüblicher Weise auf eine Richtung parallel zu bzw. längs einer (Haupt)Maschinen- bzw. Rotationsachse der Turbomaschine, "Umfangsrichtung" entsprechend auf eine Drehrichtung (eines (Haupt)Rotors) der Turbomaschine, "radial" entsprechend auf eine zur axialen und Umfangsrichtung senkrechte Richtung bzw. auf einer (Haupt)Maschinen- bzw. Rotationsachse der Turbomaschine senkrecht stehende (Koordinaten)Achse.

In einer Ausführung ist/sind die bzw. eine oder mehrere der axiale(n) Rippe(n) an einem Radialflansch angeordnet, der sich in einer Ausführung von einer Mantelfläche des Dichtrings radial nach außen erstreckt und/oder in einem stromauf- oder stromabwärtigsten axialen Viertel des Dichtrings angeordnet ist, insbesondere an einer sogenannten Schottwand.

Hierdurch kann in einer Ausführung insbesondere eine belastungsangepasste variierende Biegesteifigkeit und/oder eine vorteilhafte Verdrehsicherung realisiert werden.

In einer Ausführung weist der Dichtring in Umfangsrichtung voneinander, insbesondere äquidistant, beabstandete, insbesondere teilkreis- bzw. -ringartige und/oder integral bzw. einstückig mit dem restlichen Dichtring ausgebildete und/oder radial vorstehende, Auflagen auf, die an einer bzw. der Mantelfläche, insbesondere in einer bzw. der, insbesondere hinterschnittenen, Umfangsnut zur Befestigung des Dichtrings, angeordnete sind und Buchsen einer Lagerung des Dichtrings, insbesondere Buchsen des Leitrings, in denen in einer Ausführung dessen Leitschaufeln verstellbar gelagert sind, insbesondere mit (radiale) Spiel, radial sichern bzw. hierzu eingerichtet sind bzw. verwendet werden.

Hierdurch kann in einer Ausführung insbesondere eine vorteilhafte Buchsensicherung realisiert werden.

In einer Ausführung weist/weisen die oder eine oder mehrere der radiale(n) Rippe(n) die bzw. jeweils einen oder mehrere der Auflagen auf bzw. verbinden diese in Umfangsrichtung miteinander.

Hierdurch können diese radialen Rippen in einer Ausführung die Buchsen vorteilhaft bereits bei der Montage bzw. vor Erreichen der ihnen zugeordneten Auflagen sichern und/oder, insbesondere zugleich, eine belastungsangepasste variierende Biegesteifigkeit realisieren.

In einer Ausführung ist der Dichtring in wenigstens zwei in Umfangsrichtung aufeinanderfolge Ringsegmente geteilt bzw. segmentiert, er kann insbesondere in Umfangsrichtung in zwei Ringhälften gleicher Umfangslänge geteilt bzw. segmentiert sein.

Hierdurch kann in einer Ausführung die Herstellung und/oder Montage des Dichtrings vereinfacht werden.

In einer Ausführung kann/können eines oder mehrere dieser Ringsegmente (jeweils) zwei oder mehr, insbesondere wenigstens, insbesondere genau, drei, in Umfangsrichtung aufeinanderfolgende Teilsegmente aufweisen, die in einer Ausführung stoffschlüssig (zu dem jeweiligen Ringsegment) gefügt, insbesondere verlötet oder - schweißt, werden bzw. sind und/oder, wenigstens im Wesentlichen, die gleichen Umfangslängen aufweisen. Entsprechend erstreckt sich in einer Ausführung eine Ringhälfte von 0° bis 180° und die andere Ringhälfte von 180° bis 360° und in einer Weiterbildung deren Teilsegmente von 0° bis 60°, 60° bis 120° und 120° bis 180° bzw. 180° bis 240°, 240° bis 300° und 300° bis 360°, insbesondere bezogen auf eine Teilungsebene der in Umfangsrichtung geteilten Turbomaschine.

Hierdurch kann in einer Ausführung insbesondere eine generative Fertigung des entsprechenden Ringsegments vereinfacht, insbesondere eine kompakte(re) generative Fertigungsanlage verwendet werden.

Zusätzlich oder alternativ weisen in einer Ausführung in Umfangsrichtung wenigstens zwei einander zugewandte Stirnseiten aufeinanderfolge Ringsegmente voneinander verschiedene bzw. unterschiedliche Profile auf, insbesondere Axialrippen(segment)stirnseiten mit unterschiedlichen, insbesondere axialen und/oder radialen, Abmessungen und/oder Anordnungen, und/oder miteinander fluchtende bzw. kongruente Radialrippen(segment)stirnseiten.

Durch an Trennstellen benachbarter Ringsegmente miteinander fluchtende Stirnseiten von radialen Rippen können in einer Ausführung Buchsen vorteilhaft bereits bei der Montage bzw. vor Erreichen ihnen zugeordneter Auflagen gesichert und/oder vorteilhafte Biegesteifigkeiten realisiert werden.

Durch an Trennstellen benachbarter Ringsegmente voneinander abweichend angeordneten Stirnseiten von axialen Rippen bzw. gegeneinander versetzte Axialrippensegmente auf benachbarten Ringsegmenten bzw. an Trennstellen unstetig varrierende Axialrippen(anordnungen) kann in einer Ausführung eine vorteilhafte Verdrehsicherung realisiert werden.

In einer Ausführung ist, insbesondere hierzu, (auch) der Leitring in wenigstens, insbesondere genau, zwei in Umfangsrichtung aufeinanderfolge Leitringsegmente, insbesondere Leitringhälften, geteilt, wobei in Umfangsrichtung wenigstens eine Stirnseite eines Leitringsegments und eine Stirnseite eines benachbarten Ringsegments des segmentierten Dichtrings einander zur Verdrehsicherung teilweise, insbesondere radial und/oder axial, überdecken bzw. -greifen. Mit anderen Worten bildet in einer Ausführung wenigstens eine axiale Rippe eines Ringsegments in Umfangsrichtung einen formschlüssigen Anschlag für ein an einem benachbarten Ringsegment angeordnetes Leitringsegment.

In einer Ausführung weist/weisen in Umfangsrichtung eine oder mehrere Stirnseite(n) eines oder mehrerer der Teilsegmente jeweils einen oder mehrere Vorsprünge auf, der bzw. die (jeweils) in einen, insbesondere kongruenten, Rückschnitte einer Stirnseite eines benachbarten der Teilsegmente, insbesondere formschlüssig, eingreift(eingreifen und in einer Ausführung mit dieser stoffschlüssig gefügt, insbesondere verlötet oder -schweißt, wird/werden bzw. ist/sind.

Durch eine solche "Verzahnung" kann in einer Ausführung gegenüber einem Stumpfstoß der Teilsegmente eine Biegebelastung und/oder eine stoffschlüssige Verbindung verbessert werden.

In einer Ausführung weist wenigstens eine der Rippen in einem mittleren Fünftel eines Umfangs eines Ringsegments eine größere maximale, insbesondere axiale und/oder radiale, Abmessung, insbesondere axiale und/oder radiale Höhe bzw. Breite, auf als in einem oder beiden in Umfangsrichtung benachbarten Fünftel(n) des Umfangs. Insbesondere weist in einer Ausführung die bzw. wenigstens eine der axiale(n) Rippe(n) einer oder beider Ringhälften, die sich jeweils in Umfangsrichtung über 180° zwischen ihren Stirnseiten erstrecken, in einem Bereich zwischen 2×(180°/5) = 72° und 3×(180°/5) = 108° eine größere maximale Abmessung, insbesondere axiale und/oder radiale Höhe bzw. Breite, auf als in einem Bereich zwischen 36° und 72° und/oder einem Bereich zwischen 108° und 144°.

Hierdurch kann in einer Ausführung die Biegesteifigkeit insbesondere an eine Belastung solcher in Umfangsrichtung geteilten Dichtringe angepasst werden.

Zusätzlich oder alternativ weis in einer Ausführung wenigstens eine der Rippen an wenigstens einer Trennstelle des segmentierten Dichtrings bzw. wenigstens einer Stirnseite eines Ringsegments des segmentierten Dichtrings eine (axial) lokale Aufdickung bzw. vergrößerte, insbesondere axiale und/oder radiale, Abmessung, insbesondere axiale und/oder radiale Höhe bzw. Breite, auf.

Hierdurch kann in einer Ausführung die Verdrehsicherung bei geringem Gewicht realisiert werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine Verdichterstufe einer Gasturbine mit einem Dichtring nach einer Ausführung der vorliegenden Erfindung;
- Fig. 2: eine Dichtringhälfte eines der segmentierten Dichtringe in einer Seitansicht;
- Fig. 3: die Dichtringhälfte in perspektivischer Ansicht;
- Fig. 4: eine Stirnseite eines Teilsegments der Dichtringhälfte in perspektivischer Ansicht;
- Fig. 5: einen Profilquerschnitt des Dichtrings; und
- Fig. 6A, B: die Stirnseiten der beiden Dichtringhälften des Dichtrings.

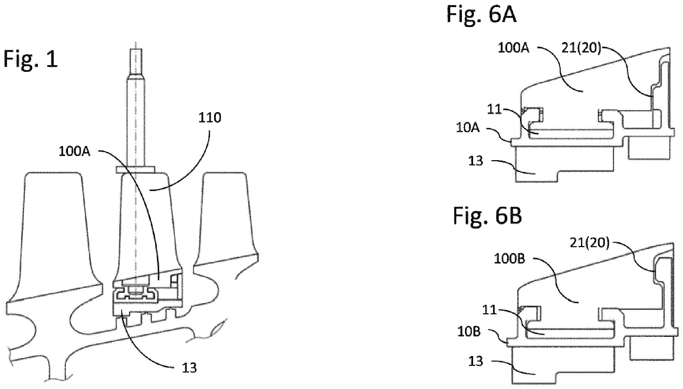

Fig. 1 zeigt eine Verdichterstufe einer Gasturbine mit einem Dichtring nach einer Ausführung der vorliegenden Erfindung in einem Meridianschnitt.

Die Stufe weist einen in Umfangsrichtung in zwei Hälften 100A, 100B geteilten Leitring (vgl. Fig. 6A, 6B) auf, an dem Leitschaufeln 110 (vgl. Fig. 1) in an sich bekannter Weise, in einer Ausführung in Buchsen (nicht dargestellt) oder buchsenlos, dreh- und somit verstellbar gelagert sind.

Auf einer den Leitschaufeln radial gegenüberliegenden bzw. inneren Seite der Leitringhälften 100A, 100B (unten in Fig. 6A, 6B) ist jeweils eine Hälfte 10A, 10B des geteilten Dichtringes befestigt, indem die Leitringhälften 100A, 100B in hinterschnittene Umfangsnuten 11 eingefädelt sind.

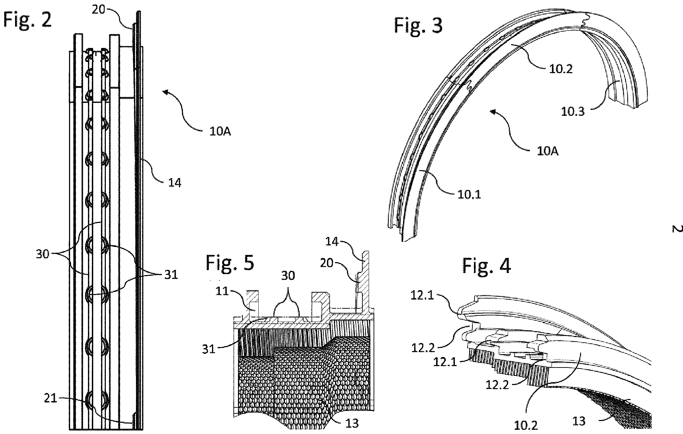

Fig. 2, 3 zeigen exemplarisch eine Dichtringhälfte 10A in einer Seit- (Fig. 2) bzw. perspektivischen (Fig. 3) Ansicht. Die andere Dichtringhälfte 10B des segmentierten Dichtrings ist bis auf nachfolgend erläuterte Unterschiede baugleich, so dass zu dieser auf die Beschreibung der Dichtringhälfte 10A Bezug genommen wird.

Wie insbesondere in Fig. 3 erkennbar, ist bzw. wird die Dichtringhälfte 10A aus drei in Umfangsrichtung aufeinanderfolgen Teilsegmenten 10.1, 10.2 und 10.3 gefügt, die in einer bevorzugten Ausführungsform stoffschlüssig miteinander verbunden, z.B. verlötet oder -schweißt sind bzw. werden.

Dabei weisen einander zugewandte Stirnseiten der Teilsegmente 10.1, 10.2 und 10.3 in Umfangsrichtung Vorsprünge 12.1 auf, die in kongruente Rückschnitte 12.2 der damit verbundenen Stirnseiten der benachbarten Teilsegmente der jeweiligen Dichtringhälfte eingreifen.

An einem Radialflansch bzw. einer Schottwand 14 ist eine in Umfangsrichtung umlaufende axiale Rippe 20 angeordnet, deren axiale Höhe (horizontal in Fig. 5) in Umfangsrichtung variiert.

Wie insbesondere in Fig. 2 erkennbar, weist die Rippe 20 an den Trennstellen des Dichtrings, d.h. den Stirnseiten der Dichtringhälften 10A, 10B (unten in Fig. 2, 3) jeweils eine lokale Aufdickung 21 auf. Nach dieser ist die axiale Höhe jeweils zunächst stark, gegebenenfalls auf Null, reduziert, um das Gewicht des Dichtrings zu reduzieren.

Hiervon ausgehend nimmt die axiale Höhe jeweils bis zur Mitte der Dichtringhälfte (oben in Fig. 2, 3) wieder zu. Hierdurch wird eine Biegesteifigkeit vorteilhaft einer Belastung des in Umfangsrichtung geteilten Dichtrings im Betrieb angepasst.

Wie insbesondere in der Zusammenschau der Fig. 6A, 6B erkennbar, sind die lokalen Aufdickungen 21 an den Stirnseiten der beiden Dichtringhälften 10A, 10B radial gegeneinander versetzt: an der Dichtringhälfte 10A ist die axiale Rippe 20 bzw. Aufdickung 21etwa auf halber radialer Höhe des Radialflanschs 14 angeordnet, an der Dichtringhälfte 10B radial außen an dem Radialflansch 14.

Somit variiert die radiale Anordnung der axialen Rippe 20 in Umfangsrichtung an den Trennstellen bzw. Stirnseiten unstetig, in Abschnitten dazwischen die axiale Abmessung der axialen Rippe 20 stetig.

Wie weiterhin in der Zusammenschau der Fig. 6A, 6B erkennbar, sind die Stirnseiten der Leitringhälften 100A, 100B so ausgebildet, dass sie die axiale Rippe 20 bzw. Aufdickung 21 an der Stirnseite der benachbarten Dichtringhälfte 10B bzw. 10A überdecken und so ein Verdrehen von Dicht- und Leitring(hälften) gegeneinander formschlüssig verhindern.

In der Umfangsnut 11 sind zwei in Umfangsrichtung umlaufende radiale Rippen 30 angeordnet.

Diese verbinden bzw. weisen jeweils in Umfangsrichtung voneinander beabstandete Auflagen 31 zur radialen Sicherung der Buchsen (nicht dargestellt) auf, in denen die Leitschaufeln 110 verstellbar gelagert sind.

Somit variiert die axiale Breite der radialen Rippen 30 in Umfangsrichtung im Bereich der Auflagen 31 lokal, während die radialen Rippen 30 an den Trennstellen des segmentierten Dichtrings bzw. den Stirnseiten seiner Ringhälften 10A, 10B miteinander fluchten.

Beim Einfädeln der Umfangsnuten 11 der Dichtringhälften 10A, 10B auf die an den Leitschaufeln 110 befestigten Leitringhälften 100A, 100B sichern die radialen Rippen 30 die Buchsen radial, in der Montageend- bzw. Betriebsstellung die Auflagen 31.

Dabei kann durch die Auflagen 31 vorteilhaft eine größere Auflage- bzw. Sicherungsfläche zur Verfügung gestellt, durch die dazwischenliegenden Abschnitte der radialen Rippen 30 Gewicht reduziert und/oder eine Biegesteifigkeit (weiter) erhöht werden.

Die Teilsegmente 10.1 - 10.3 der Dichtringhälften 10A, 10B werden bzw. sind jeweils mittels selektivem Laserschmelzen oder -sintern generativ zusammen mit dem wabenartigen Einlaufbelag 13 gefertigt.

Der Begriff wabenartig stellt auf einen Hohlräume ausbildenden Einlaufbelag ab, wobei die Hohlräume in einer bevorzugten Ausführungsform mindestens zum Teil vollständig voneinander abgetrennt sein können. Der Begriff wabenartig soll keine bestimmte Geometrie der die Hohlräume in radialer Richtung trennenden Hohlräume beschreiben, d.h. ist nicht etwa auf die traditionelle hexagonale Wabenform eingeschränkt.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10A, 10B: Dichtringhälfte
- 10.1 - 10.3: Teilsegment
- 11: Umfangsnut
- 12.1: Vorsprung
- 12.2: Rückschnitt
- 13: Einlaufbelag (Dichtung)
- 14: Radialflansch
- 20: axiale Rippe
- 21: Aufdickung
- 30: radiale Rippe
- 31: Auflage
- 100A, 100B: Leitringhälfte
- 110: Leitschaufel

## Patentansprüche

1. Dichtring für eine Turbomaschine, insbesondere eine Verdichter- oder Turbinenstufe einer Gasturbine, der eine Dichtung aufweist und der eine Umfangsnut (11) aufweist, mit der der Dichtring befestigt ist bzw. wird, wobei ein Profilquerschnitt des Dichtrings in Umfangsrichtung variiert
**gekennzeichnet durch**
wenigstens eine wenigstens abschnittsweise in Umfangsrichtung umlaufende radiale Rippe (30),
wobei ihre Abmessung und/oder Anordnung in Umfangsrichtung wenigstens abschnittsweise stetig variiert, wobei die wenigstens eine radiale Rippe (30) an einer Mantelfläche
in der Umfangsnut (11) des Dichtrings angeordnet ist.

2. Dichtring nach dem vorhergehenden Anspruch, **dadurch gekennzeichnet, dass** der Dichtring eine wenigstens abschnittsweise in Umfangsrichtung umlaufende axiale Rippe (20) aufweist, wobei die axiale Rippe (20) an einem Radialflansch (14) angeordnet ist.

3. Dichtring nach einem der vorhergehenden Ansprüche, **gekennzeichnet durch** in Umfangsrichtung voneinander beabstandete, an einer Mantelfläche angeordnete Auflagen (31) zur radialen Sicherung von Buchsen einer Lagerung (100A, 100B) des Dichtrings (10A, 10B).

4. Dichtring nach Anspruch 3, **dadurch gekennzeichnet, dass** die radiale Rippe (30) die Auflagen (31) aufweist.

5. Dichtring nach einem der vorhergehenden Ansprüche, **dadurch gekennzeichnet, dass** der Dichtring in wenigstens zwei in Umfangsrichtung aufeinanderfolge Ringsegmente (10A, 10B) geteilt ist.

6. Dichtring nach dem vorhergehenden Anspruch, **dadurch gekennzeichnet, dass** wenigstens eines der Ringsegmente (10A, 10B) wenigstens zwei in Umfangsrichtung aufeinanderfolge Teilsegmente (10.1 - 10.3) aufweist und/oder in Umfangsrichtung wenigstens zwei einander zugewandte Stirnseiten aufeinanderfolgender Ringsegmente (10A, 10B) voneinander verschiedene Profile, insbesondere Axialrippenstirnseiten mit unterschiedlichen, insbesondere axialen und/oder radialen, Abmessungen und/oder Anordnungen, und/oder miteinander fluchtende Radialrippenstirnseiten aufweisen.

7. Dichtring nach dem vorhergehenden Anspruch, **dadurch gekennzeichnet, dass** in Umfangsrichtung wenigstens eine Stirnseite wenigstens eines der Teilsegmente wenigstens einen Vorsprung (12.1) aufweist, der in einen Rückschnitt (12.2) einer Stirnseite eines benachbarten der Teilsegmente eingreift.

8. Anordnung für eine Turbomaschine, insbesondere eine Verdichter- oder Turbinenstufe einer Gasturbine, mit einem Leitring, an dem Leitschaufeln (110), insbesondere verstellbar, angeordnet sind und an dem, insbesondere auf einer gegenüberliegenden Seite, mindestens ein Dichtring nach einem der vorhergehenden Ansprüche, insbesondere lösbar und/oder form- und/oder reibschlüssig, befestigt ist.

9. Anordnung nach dem vorhergehenden Anspruch, **dadurch gekennzeichnet, dass** der Leitring wenigstens zwei in Umfangsrichtung aufeinanderfolge Leitringsegmente (100A, 100B) aufweist, wobei in Umfangsrichtung wenigstens eine Stirnseite eines Leitringsegments und eine Stirnseite eines benachbarten Leitringsegments (10B, 10A) des Dichtrings einander zur Verdrehsicherung teilweise, insbesondere axial und/oder radial, überdecken.

10. Verdichter- oder Turbinenstufe für eine Gasturbine mit einer Anordnung nach einem der Ansprüche 8 oder 9.

11. Gasturbine, insbesondere Flugtriebwerk, mit wenigstens einer Verdichter- und/oder Turbinenstufe nach dem vorhergehenden Anspruch.

12. Verfahren zur Herstellung eines Dichtrings nach einem der Ansprüche 1 bis 7, wenigstens teilweise mittels eines generativen Fertigungsverfahrens, insbesondere mittels selektiver Laserbeaufschlagung.

## Claims

1. Sealing ring for a turbomachine, in particular a compressor stage or turbine stage of a gas turbine, which has a seal and which has a peripheral groove (11) with which the sealing ring is or will be fastened, a profile cross section of the sealing ring varying in the peripheral direction,
**characterized by**
at least one radial rib (30), which extends at least in portions in the peripheral direction,
its dimension and/or arrangement varying continuously in the peripheral direction at least in portions, the at least one radial rib (30) being arranged on a lateral face in the peripheral groove (11) of the sealing ring.

2. Sealing ring according to the preceding claim, **characterized in that** the sealing ring has an axial rib (20) which extends at least in portions in the peripheral direction, the axial rib (20) being arranged on a radial flange (14).

3. Sealing ring according to either of the preceding claims, **characterized by** supports (31), which are spaced apart from one another in the peripheral direction and are arranged on a lateral face, for radially securing sockets of a bearing (100A, 100B) of the sealing ring (10A, 10B).

4. Sealing ring according to claim 3, **characterized in that** the radial rib (30) has the supports (31).

5. Sealing ring according to any of the preceding claims,
**characterized in that** the sealing ring is divided into at least two ring segments (10A, 10B) which follow one another in the peripheral direction.

6. Sealing ring according to the preceding claim, **characterized in that** at least one of the ring segments (10A, 10B) has at least two partial segments (10.1 - 10.3) which follow one another in the peripheral direction and/or, in the peripheral direction, at least two mutually facing end faces of successive ring segments (10A, 10B) have different profiles, in particular axial rib end faces having different, in particular axial and/or radial, dimensions and/or arrangements, and/or mutually aligned radial rib end faces.

7. Sealing ring according to the preceding claim, **characterized in that,** in the peripheral direction, at least one end face of at least one of the partial segments has at least one projection (12.1) which engages in a radial recess (12.2) of an end face of an adjacent partial segment.

8. Arrangement for a turbomachine, in particular a compressor stage or turbine stage of a gas turbine, comprising a guide ring on which guide vanes (110) are arranged, in particular adjustably, and on which, in particular on an opposite face, at least one sealing ring according to any of the preceding claims is fastened, in particular releasably and/or form-fittingly and/or frictionally.

9. Arrangement according to the preceding claim, **characterized in that** the guide ring has at least two guide ring segments (100A, 100B) which follow one another in the peripheral direction, in the peripheral direction, at least one end face of a guide ring segment and one end face of an adjacent guide ring segment (10B, 10A) of the sealing ring overlapping one another in part, in particular axially and/or radially, in order to secure against rotation.

10. Compressor stage or turbine stage for a gas turbine comprising an arrangement according to any of claims 8 or 9.

11. Gas turbine, in particular aircraft engine, comprising at least one compressor stage and/or turbine stage according to the preceding claim.

12. Method for producing a sealing ring according to any of claims 1 to 7, at least partially by means of a generative manufacturing method, in particular by means of selective laser impingement.

## Revendications

1. Bague d'étanchéité pour une turbomachine, en particulier un étage de compresseur ou de turbine d'une turbine à gaz, qui présente un joint d'étanchéité et qui présente une rainure circonférentielle (11) avec laquelle la bague d'étanchéité est ou devient fixée, dans laquelle une section transversale de profil de la bague d'étanchéité varie dans la direction circonférentielle
**caractérisée par**
au moins une nervure radiale (30) s'étendant dans la direction circonférentielle au moins dans certaines sections,
dans laquelle sa dimension et/ou sa disposition dans la direction circonférentielle varient en continu au moins dans certaines sections, dans laquelle l'au moins une nervure radiale (30) est disposée sur une surface d'enveloppe dans la rainure circonférentielle (11) de la bague d'étanchéité.

2. Bague d'étanchéité selon la revendication précédente,
**caractérisée en ce que** la bague d'étanchéité présente une nervure axiale (20) s'étendant dans la direction circonférentielle au moins dans certaines sections, dans laquelle la nervure axiale (20) est disposée sur une bride radiale (14).

3. Bague d'étanchéité selon l'une des revendications précédentes, **caractérisée par** des appuis (31) espacés les uns des autres dans la direction circonférentielle et disposés sur une surface d'enveloppe pour la fixation radiale de douilles d'un palier (100A, 100B) de la bague d'étanchéité (10A, 10B).

4. Bague d'étanchéité selon la revendication 3, **caractérisée en ce que** la nervure radiale (30) présente les appuis (31).

5. Bague d'étanchéité selon l'une des revendications précédentes, **caractérisée en ce que** la bague d'étanchéité est divisée en au moins deux segments de bague (10A, 10B) successifs dans la direction circonférentielle.

6. Bague d'étanchéité selon la revendication précédente,
**caractérisée en ce qu'**au moins l'un des segments de bague (10A, 10B) présente au moins deux segments partiels (10.1 - 10.3) successifs dans la direction circonférentielle et/ou, dans la direction circonférentielle, au moins deux faces frontales tournées l'une vers l'autre de segments de bague (10A, 10B) successifs présentent des profils différents l'un de l'autre, en particulier des faces frontales de nervures axiales, comportant des dimensions et/ou des dispositions, en particulier axiales et/ou radiales, différentes, et/ou des faces frontales de nervures radiales alignées entre elles.

7. Bague d'étanchéité selon la revendication précédente,
**caractérisée en ce que,** dans la direction circonférentielle, au moins une face frontale d'au moins l'un des segments partiels présente au moins une saillie (12.1) qui vient en prise dans une découpe (12.2) d'une face frontale d'un segment partiel adjacent des segments partiels.

8. Agencement pour une turbomachine, en particulier un étage de compresseur ou de turbine d'une turbine à gaz, comportant une bague directrice sur laquelle sont disposées, en particulier de manière réglable, des aubes directrices (110) et sur laquelle est fixée, en particulier de manière amovible et/ou par complémentarité de forme et/ou par friction, en particulier sur un côté opposé, au moins une bague d'étanchéité selon l'une des revendications précédentes.

9. Agencement selon la revendication précédente, **caractérisé en ce que** la bague de guidage présente au moins deux segments de bague de guidage (100A, 100B) successifs dans la direction circonférentielle, dans lequel, dans la direction circonférentielle, au moins une face frontale d'un segment de bague de guidage et une face frontale d'un segment de bague de guidage (10B, 10A) adjacent de la bague d'étanchéité se recouvrent partiellement, en particulier axialement et/ou radialement, pour assurer une sécurité antirotation.

10. Étage de compresseur ou de turbine pour une turbine à gaz, comportant un agencement selon l'une des revendications 8 ou 9.

11. Turbine à gaz, en particulier moteur d'aéronef, comportant au moins un étage de compresseur et/ou de turbine selon la revendication précédente.

12. Procédé de fabrication d'une bague d'étanchéité selon l'une des revendications 1 à 7, au moins partiellement au moyen d'un procédé de fabrication additive, en particulier au moyen d'une sollicitation sélective par laser.
